Europäisches Patentamt

European Patent Office

Office européen des brevets

(11) Publication number: **0 398 423 B1**

# EUROPEAN PATENT SPECIFICATION

(45) Date of publication of patent specification: **17.08.94**　(51) Int. Cl.⁵: **H04N 9/79, H04N 11/20**

(21) Application number: **90201178.2**

(22) Date of filing: **09.05.90**

(54) **Arrangement for recording a video signal on a record carrier.**

(30) Priority: **16.05.89 NL 8901210**

(43) Date of publication of application:
**22.11.90 Bulletin 90/47**

(45) Publication of the grant of the patent:
**17.08.94 Bulletin 94/33**

(84) Designated Contracting States:
**AT DE ES FR GB**

(56) References cited:
**EP-A- 0 111 157　　EP-A- 0 143 373
WO-A-86/01967　　DE-A- 2 740 942
US-A- 3 729 579　　US-A- 4 335 393**

**MANUSKRIPTE DER VORTRÄGE, 10. JAH-
RESTAGUNG DER FKTG, Munich, 13th-17th
September 1982, pages 375-391; K. JUHNKE:
"Ein Multistandard-Farbdecoder für Farbfern-
sehempfänger mit nur einer integrierten
Schaltung"**

(73) Proprietor: **N.V. Philips' Gloeilampenfabrieken
Groenewoudseweg 1
NL-5621 BA Eindhoven (NL)**

(72) Inventor: **Horsten, Johannes Bernardus
INT. OCTROOIBUREAU B.V.,
Prof. Holstlaan 6
NL-5656 AA Eindhoven (NL)**
Inventor: **Kalfs, Johannes Jozef Wilhelmus
INT. OCTROOIBUREAU B.V.,
Prof. Holstlaan 6
NL-5656 AA Eindhoven (NL)**

(74) Representative: **van der Kruk, Willem Leonar-
dus et al
INTERNATIONAAL OCTROOIBUREAU B.V.,
Prof. Holstlaan 6
NL-5656 AA Eindhoven (NL)**

## Description

The invention relates to an arrangement for recording a composite video signal on a magnetic record carrier, the arrangement comprising an input terminal for receiving the video signal, which input terminal is coupled to an input of a video-signal-processing unit, which has an output coupled to an input of a recording unit, for recording the video signal which has been processed in the video-signal-processing unit as a time-multiplex video signal on the record carrier.

Such an arrangement is known from EP-A 111 157. The arrangement described therein is a video recorder by means of which a composite PAL video signal is recorded on the record carrier in tracks which are inclined relative to the longitudinal direction of the record carrier. A composite or CVBS (chroma-video-blanking-sync) signal is a signal comprising both the chrominance and the luminance component of the video signal.

Moreover, it is known from EP-A 232 940 to record a time multiplex video signal in the form of a MAC video signal on a magnetic record carrier.

It is an object of the invention to provide an arrangement which offers more possibilities than the video recorders known until now and which is more versatile. To this end the arrangement in accordance with the invention is characterized in that the input terminal is arranged to receive at least a first CVBS video signal in accordance with a first video standard or a second CVBS video signal in accordance with a second video standard, in that the input terminal is coupled to a detection unit which is adapted to detect the video standard of the CVBS signal applied to the input terminal and which is further adapted to supply at least a first or a second control-signal to an output if the CVBS video signal applied to the input terminal is a video signal in conformity with the first video standard or the second video standard respectively, in that the output of the detection unit is coupled to a control-signal input of the video-signal-processing unit, which processing unit is adapted to convert the video signal applied to its input into a time-multiplex video signal in conformity with a third standard under the influence of the control-signal applied to its control-signal input, and to supply the video signal in conformity with the third standard to its output, the video standard of the video signal applied to the input terminal not being the third standard.

The term "time-multiplex video signal" is to be understood to mean that the luminance component and the chrominance component(s) of the video signal are "transmitted" in time-multiplex. An example of such a signal is a MAC video signal, or a MUSE video signal.

The invention is based on the recognition of the fact that upon introduction of, for example, MAC the present video standard such as PAL, SECAM and NTSC will continue to exist for some time. In this transition period it should be possible for the owners of a MAC television set to view programs transmitted in accordance with the PAL, SECAM or NTSC standard at a later instant by means of their MAC video recorders.

If the incoming video signal is now first converted into a MAC signal and is subsequently recorded on the record carrier as a MAC signal, it is achieved that users of a MAC television set, if they have an arrangement in accordance with the invention, at their disposal can subsequently view television programs transmitted in accordance with one of the existing standards.

It is to be noted that there are of course MAC television sets which are capable of receiving a PAL signal and converting this signal into a picture signal. In that case it would be adequate to record a television program transmitted in accordance with the PAL standard with a normal PAL (or SECAM or NTSC) video recorder. It is then also possible to play back such programs at a later date. However, the programs are then recorded on PAL video cassettes in accordance with the PAL standard. If, after a number of years the video recorder is (to be) replaced by a new video recorder, which is then for example of the MAC type, the cassettes containing old program will have become useless. The use of the arrangement in accordance with the invention results in a multi-standard recording apparatus which now already enables programs to be recorded on MAC video tapes.

Moreover, this apparatus has an additional advantage.

The direct electrical conversion from PAL to MAC, without the use of the arrangement in accordance with the invention, does not result in a well stabilised MAC signal which can be monitored on a MAC television set. In accordance with the MAC standard the inaccuracy of the clock frequency should not exceed $2.5 \times 10^{-7}$ times the clock frequency (of 20.25 MHz). This is approximately 5 Hz. In accordance with the PAL standard the maximum inaccuracy is $1 \times 10^{-6}$ times the line frequency (of approximately 15 kHz). Converted to a frequency of 20 MHz this gives an inaccuracy of approximately 20 Hz.

This means that this inaccuracy will also occur in the video signal which has been converted to the MAC standard. Thus, said video signal cannot be used with a MAC television set and can therefore not be displayed on the television set. Therefore, it would not be unlikely to expect that the arrangement in accordance with the invention is not capable of supplying a MAC video signal suitable for a MAC television set. However, the contrary is found to be true.

When the PAL signal which has been converted into a MAC signal is first recorded on a video recorder the recording speed of the video recorder (i.e. the tape transport speed and the speed of rotation of the head drum) can be controlled in such a way by means of the recording control in the recorder that a correct MAC signal is recorded on the record carrier with an inaccuracy within the margins as prescribed by the MAC standard. During reproduction this results therefore in a MAC signal which can be reproduced without any problem on a MAC television set.

The apparatus in accordance with the invention may be characterized further in that the video-signal-processing unit comprises a signal separator and a converter unit, in that the input of the video-signal-processing unit is coupled to an input of the signal separator, which comprises three outputs coupled to three inputs of the converter unit, which converter unit has an output coupled to the output of the video-signal-processing unit. in that the control-signal input of the video-signal-processing unit is coupled to control-signal inputs of the signal separator and the converter unit, in that the signal separator is adapted to derive under the influence of the control-signal applied to its control-signal input, a luminance signal Y, a first chrominance signal component R-Y and a second chrominance signal component B-Y, from the CVBS video signal applied to its input and to supply said signals to the first, the second and the third output respectively, and in that the converter unit is adapted to convert under the influence of the control-signal applied to its control-signal input the signals Y, R-Y and B-Y applied to its first, its second and its third input respectively into the video signal in conformity with the third standard. Thus, the CVBS signal is first converted into the signal components Y, V-(= R-Y) and U(= B-Y), after which depending on the standard of the television signal these components are converted in the appropriate manner into a video signal in conformity with the third standard, for example a MAC signal.

For a PAL video signal this means that the arrangement is characterized further in that the video-signal-processing unit is adapted to subject the luminance signal of a line of the sequence number i in the PAL signal time-compression and to insert the compressed luminance signal into a first block section of a line of the sequence number j in the MAC signal, and is further characterized in that it is adapted to average and compress the first chrominance signals of a number of consecutive lines having sequence numbers ranging from i to i + k (k ≥ 1) inclusive and to insert the signal thus obtained into a second block section of a line of the sequence number l in the MAC signal, i being an even number and l = i + n, where n>k, and is adapted to average and compress the second chrominance signals of the same number of consecutive lines having the sequence numbers i + 1 to i + k + 1 inclusive and to insert the signal thus obtained into the second block section of the line of the sequence number l + 1 in the MAC signal.

The delay of the luminance signal is necessary to compensate for the processing time needed to process the chrominance signal. Preferably, the luminance signal is given an additional delay of one line period in order to compensate for the delay in the colour signal which after reproduction from the record carrier, arises in the MAC decoder in the receiver (the television set). Preferably, the chrominance signals U and V respectively are averaged over three lines in the case of conversion from PAL to MAC.

The reason for this is that normally in order to correct for the PAL phase error already an averaging over two lines is applied. However, this results in "sagging" (shifting) of the colour by half a line. Moreover, after reproduction by means of the arrangement this shift results in a further degradation of the picture, a further averaging operation being effected in the MAC decoder of the MAC television set in order to convert the MAC signal into a picture signal. By averaging over three lines sagging is precluded and, in addition this provides compensation for said averaging in the decoder. For the conversion of a SECAM signal the apparatus is characterized in that the video-signal-processing unit is adapted to subject the luminance signal of a line of the sequence number i in the SECAM signal to time-compression and to insert the compressed luminance signal into the first block section of a line of the sequence number j in the MAC signal and is adapted to compress the first and the second chrominance signal components in lines having the sequence numbers i and i + 1 respectively and to insert said signal components into second block sections of lines having sequence numbers k and k + 1 respectively in the MAC signal.

The apparatus may be characterized further in that the arrangement comprises a second input terminal, in that the first mentioned input terminal is further arranged to receive the chrominance signal C of the CVBS video signal and the second input terminal is arranged to receive the luminance signal Y of the CVBS video signal, in that the second input terminal is coupled to a first input of switching means and the first input of the signal separator is coupled to a second input of the switching means, and in that an output of the switching means is coupled to the first input of the converter unit. In this way it is possible to apply signals other than video signals in the form of CVBS signals to the apparatus. The first mentioned input terminal remains in use but now only receives the chrominance signal. The luminance signal can now be applied separately to a second input terminal. An example of such a signal is an S-VHS video signal.

It should be noted that the publication "Ein Multistandard-Farbdekoder für Farbfernsehempfänger mit nur einer integrierten Schaltung" in "Manuskripte der Vorträge, 10. Jahrestagung der FKTG", Munich, 13-17/9/82, pp. 375-391, Author K. Juhnke, discloses a multistandard decoder for converting PAL, NTSC or SECAM composite videosignals into R, G, B signals for application to a picture tube of a television receiver.

Embodiments of the invention will now be described in more detail, by way of example, with reference to the accompanying drawings. In the drawings

Fig. 1 shows a first embodiment of the invention.

Fig. 2 shows a second embodiment of the invention,

Fig. 3 shows frequency response curves of two CVBS signals,

Fig. 4 shows an example of the encoder in Figs. 1 and 2,

Fig. 5 shows the baseband signal waveform of the MAC signal,

Fig. 6 is a Table giving characteristic data of the MAC signal,

Fig. 7 illustrates the conversion of a PAL signal into a MAC signal,

Fig. 8 illustrates the conversion of a SECAM signal into a MAC signal, and

Fig. 9 illustrates the conversion of an NTSC signal into a MAC signal.

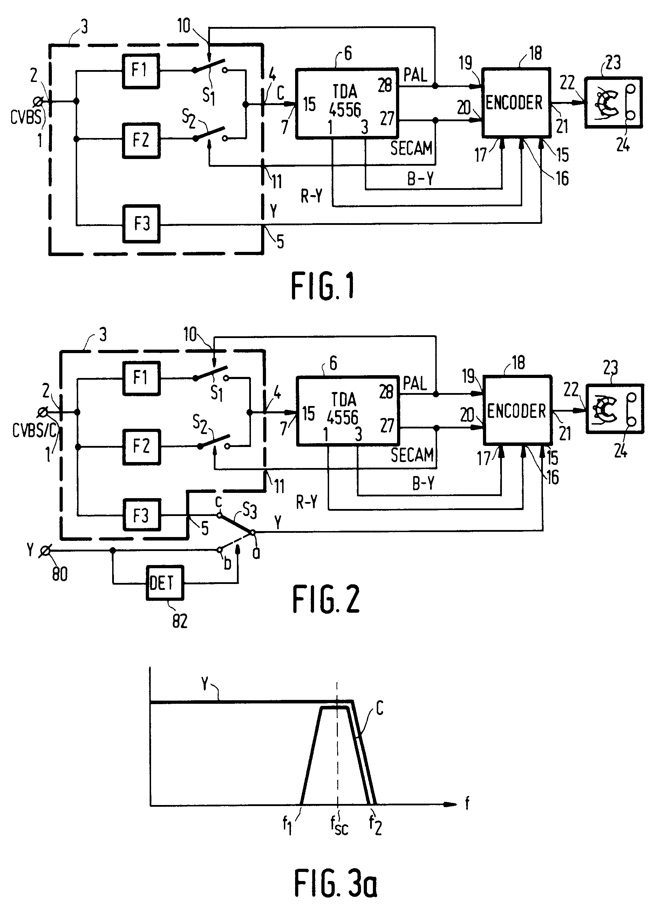

Fig. 1 shows a first embodiment. An input terminal 1, to which the CVBS signal or the composite video signal can be applied, is coupled to an input 2 of a Y/C separator 3. The chrominance signal C is available on the output 4 and the luminance signal Y is available on the output 5 of the separator 3. The chrominance signal C is applied to the input 7 of a multi-standard decoder 6, for example in the form of IC type TDA 4556. This input 7 is pin 15 of the IC.

The IC is capable of determining with which TV standard the chrominance signal applied to the input 7 complies. Depending on the detected standard, a control-signal is supplied to pin 27 (for SECAM), pin 28 (for PAL), pin 26 - not shown - (for NTSC with $f_{sc}$ = 3.58 MHz), or pin 25 - not shown - (for NTSC with $f_{sc}$ = 4.4 MHz). Moreover, from the chrominance signal applied to pin 15 the IC derives two colour difference signals for each of the IC standards namely a V(= R-Y) signal and a U(= B-Y) signal, which signals are applied to pin 1 and pin 3 respectively. For more information on the TDA 4556 IC reference is made to the development sample datasheet no. 9397 051 50142 published by N.V. Philips' Gloeilampenfabrieken.

The control-signals generated by the IC 6 are applied to the Y/C separator 3. For this purpose pin 28 is coupled to a control-signal input 10 and pin 27 is coupled to a control-signal input 11 of the Y/C separator 3.

In order to extract the chrominance and the luminance signals from the CVBS signal the Y/C separator 3 may be of the following construction. The input 2 of the separator 3 is coupled to inputs of filter circuits F1, F2 and F3. The output of the filter device F1 is coupled to the output 4 via a switch S1. The output of the filter device F2 is also coupled to the output 4 via a switch S2. The output of the filter device F3 is coupled to the output 5.

The control-signal input 10 is coupled to the switch S1 and controls the switch S1 in such a way that this switch is closed if a control-signal is applied to the switch S1 via the input 10. The control-signal input 11 is coupled to the switch S2 and controls this switch in such a way that this switch is closed if a control-signal is applied to it via the input 11.

The arrangement shown in Fig. 1 is adapted to convert either a PAL signal or a SECAM signal into a MAC signal.

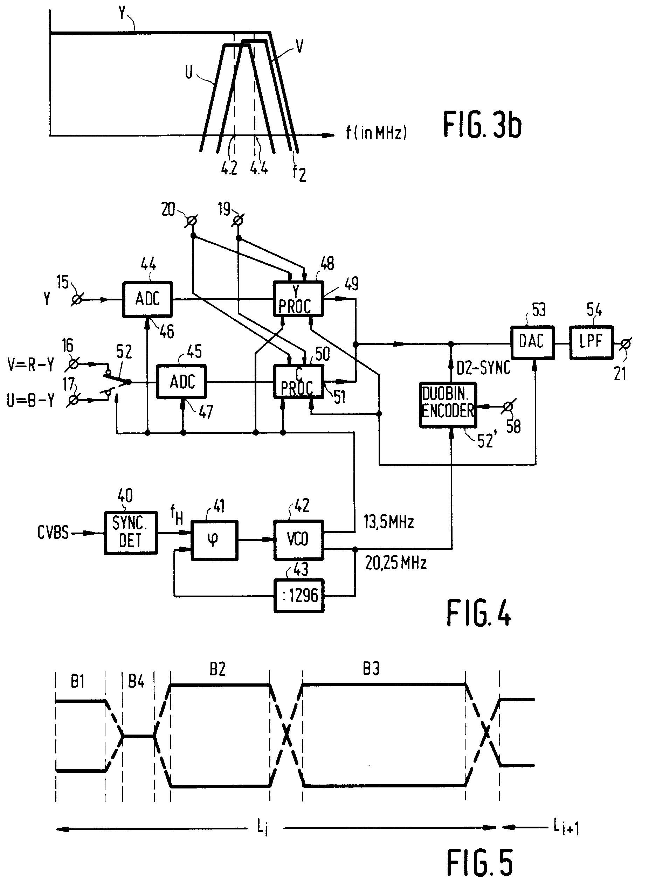

A CVBS signal in accordance with the PAL standard which is applied to the input terminal 1 has a frequency response as illustrated in Fig. 3a. The CVBS signal comprises a luminance component Y is situated in a frequency range from 0-f2 MHz, where f2 is approximately 5.2 MHz. The chrominance component C is situated in a frequency band from f1-f2 MHz, where f1 is approximately 3.8 MHz. The chrominance signal is quadrature-modulated with suppressed carrier. A CVBS signal in conformity with the SECAM standard is applied to the terminal and has a frequency response as illustrated in Fig. 3b. Again the luminance component is situated in a frequency range from 0-f2 MHz and the chrominance signal is frequency-modulated on two carriers, a 4.2 MHz carrier for U and a 4.4 MHz carrier for V, with a bandwidth of 0.8 MHz.

The filter F3 filters the CVBS signal in such a way that the luminance signal is extracted and is applied to the output 5.

The filter devices F1 and F2 extract the chrominance signal for PAL and SECAM respectively.

If the decoder 6 does not know which signal is applied to the terminal 1 the decoder successively generates control-signals on the pins 27 and 28. The control-signal on the pin 28 causes the switch S1 to close. If the decoder 6 locks to the incoming signal the signal is apparently a PAL signal. The control-signal then remains on pin 28, so that the switch S1 remains closed. If the decoder 6 does not lock to the incoming signal the control-signal on pin 28 will disappear and the decoder will generate a control-signal on pin 27. This control-signal is applied to the switch S2, which consequently closes. If the decoder 6 now locks to the incoming signal this signal will be SECAM signal. The control-signal then remains on pin 27 and the switch S2 remains closed.

If the arrangement should also be capable of converting signals other than PAL and SECAM signals into a MAC signal, the TDA 4556 IC comprises the aforementioned pins 25 and 26 for this purpose, to indicate that the decoder has locked to an 4.43 MHz NTSC signal or a 3.587 MHz NTSC signal respectively.

The signals Y, R-Y and B-Y are applied to inputs 15, 16 and 17 respectively of an encoder 18. If the CVBS signal is a PAL signal video signals are applied $\underline{via}$ the inputs 15, 16 and 17, which video signal contains luminance signal, a chrominance signal component R-Y and a chrominance signal component B-Y in successive lines. If the CVBS signal is a SECAM signal a luminance signal and a chrominance-signal component R-Y will be applied to the decoder 18 in the first line and a luminance signal and a chrominance signal component B-Y will be applied in the second line of every two consecutive lines.

Depending on whether the signal is a PAL or a SECAM signal the encoder 18 should convert the signals applied to its inputs 15, 16 and 17 into a MAC signal. For this purpose the output terminals 28 and 27 of the IC 6 are coupled to inputs 19 and 20 respectively of the encoder 18. Thus, depending on the control-signal applied $\underline{via}$ the input 19 or 20, the encoder knows whether the video signals on the inputs 15, 16 and 17 are video signals in accordance with the PAL or the SECAM standard. The encoder 18 can now convert the video signals into a MAC video signal, which is applied to the output 21. This output 21 is coupled to the input 22 of a recording unit 23, with which the MAC signal can be recorded on the record carrier 24 after FM modulation.

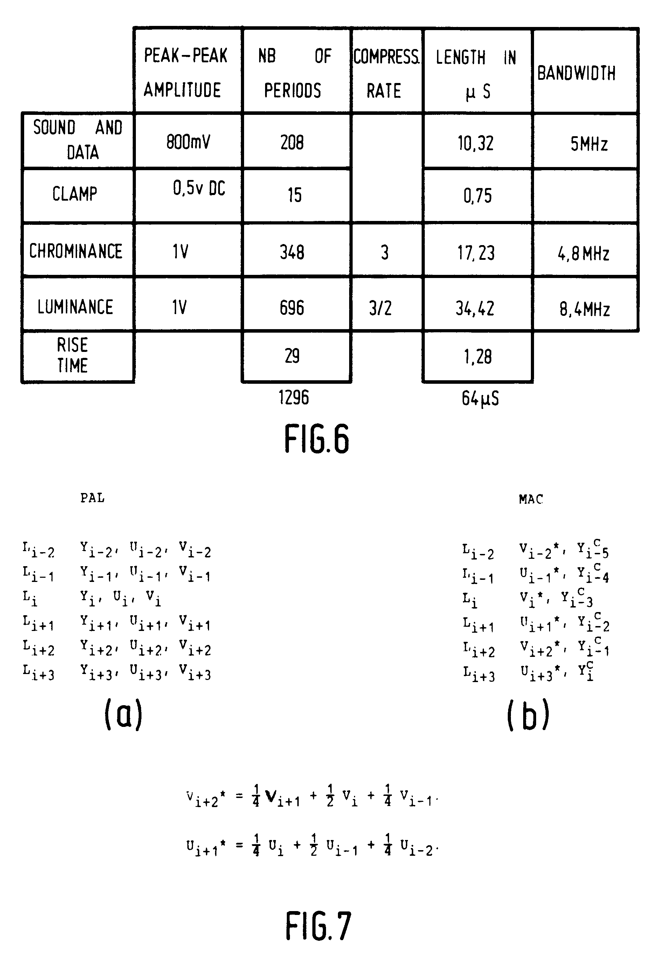

Fig. 4 shows an example of the encoder 18 for converting the signals applied to the inputs 15, 16 and 17 into a D2 MAC signal. The D2 MAC signal is represented diagrammatically in Fig. 5. Moreover, the Table in Fig. 6 gives characteristic data of the MAC signal.

Fig. 5 shows a video line $L_i$ of the MAC signal. The lines have a length of 1296 clock periods (in the case of a clock frequency of 20.25 MHz). The line comprises three main signal blocks B1, B2 and B3. The block B1 has a length of 208 clock periods and comprises 105 bits of digital data (sound and sync). The block B2 has a length of 348 clock periods and comprises 349 samples of a colour difference component. For one line this is the component B-Y and for the next line this is the component R-Y. The block B3 has a length of 696 clock periods and comprises 696 samples of the luminance signal.

B4 represents the clamping interval which has a length of 15 clock periods and which is situated at 0.5 V. The transition from B1 to B4 has a length of 4 clock periods. The transition from B4 to B2 is a weighted transition having a length of 11 clock periods. The transition from B2 to B3 is also a weighted transition having a length of 6 clock periods. The transition from B3 to the block B1 of a subsequent line $L_{i+1}$ is a weighted transition having a length of 8 clock periods.

The encoder shown in Fig. 4 operates as follows. The conversion from PAL to MAC will be described first. This means that a control-signal is applied to the control signal input 19 and that in consecutive lines $L_i$ of the PAL video signal the signals as shown in Fig. 7a are applied to the terminals 15, 16 and 17. The lines $L_i$ comprise a luminance signal $Y_i$ which is applied to the input 15, a chrominance signal $U_i(=B_i\text{-}Y_i)$ which is applied to the input 17, and a chrominance signal $V_i$ - $(=R_i\text{-}Y_i)$ which is applied to the input 16.

The arrangement further comprises a synchronising signal detector 40, which extracts the line synchronising signal $f_H$ from the CVBS signal applied to its input. This line synchronising signal is applied to a phase locked loop comprising a phase comparator 41, a voltage controlled oscillator 42 and a frequency divider 43. From the synchronising signal $f_H$, which has a frequency of approximately 15 kHz, the oscillator derives clock frequencies of 13.5 MHz and 20.25 MHz. The frequency divider 43 divides the 20.25 MHz clock frequency applied to its input by 1296.

In the AD converter 44 the luminance signal is sampled with a sampling rate of 13.5 MHz, applied via the clock-signal input 46, and is subsequently digitised. The digitised luminance signal is applied to the luminance signal processing unit 48. In the processing unit 48 the luminance signal of a line, for example the signal $Y_{i-2}$ is time compressed by a compression factor of 3/2. Consequently the sampling rate becomes 20.25 MHz (13.5 x 3/2 MHz). Subsequently the compressed signal is stored in the line $L_{i+1}$ of the MAC signal. This means that the luminance signal in the line $L_{i+1}$ of the MAC signal is identical to the compressed luminance signal $Y_{i-2}{}^c$ of the line $L_{i-2}$ of the PAL signal, see Fig. 7.

The processing unit 48 supplies the signal thus processed to the output 49 at such an instant that, viewed in time, said signal appears exactly in block B3 of every line, see Fig. 5. The chrominance signal components V and U are applied to the inputs 16 and 17. The switch 52 is changed over. Under the influence of the 13.5 MHz clock signal applied to a clock signal input of the switch 52 Thus, the analog-to-digital converter 45 alternately takes samples of the U and the V signal, the sampling rate again being 13.5 MHz. As a result of this a data stream with a sampling rate of 13.5 MHz will appear on the output of the AD converter 45. The sampling rate is 6.75 MHz for each of the signal components U and V in this data stream.

In the chrominance signal processing unit 50 the chrominance signal is compressed by a factor of 3. Consequently the sampling rate for each chrominance signal component also becomes 20.25 MHz (3 x 6.75 MHz). Moreover, the chrominance signal is averaged in the processing unit 50.

The U component in the line $L_{i+1}$ in the MAC signal, i.e. $U_{i+1}^*$, is derived from the U components of the three preceding lines in the PAL signal in accordance with the following formula.

$$U_{i+1}^* = \tfrac{1}{4} U_i + \tfrac{1}{2} U_{i-1} + \tfrac{1}{4} U_{i-2}.$$

Similarly the V component in the line $L_{i+2}$ in the MAC signal, i.e. $V_{i+2}$, is derived by means of the following formula

$$V_{i+1}^* = \tfrac{1}{4} V_{i+1} + \tfrac{1}{2} V_i + \tfrac{1}{4} V_{i-1}.$$

The processing unit 50 applies the U* and V* components after one another to the output 51 in such a way that viewed in time they appear exactly in the blocks B2 of every two consecutive lines $L_{i+1}$ and $L_{i+2}$.

Moreover there is provided a duobinary encoder 52, which is adapted to generate the digital data including the D2 MAC synchronising signal, which is inserted in the blocks B1 of the lines. An audio signal, which is also inserted in the blocks B1 by the encoder 52, can be applied via the terminal 58.

The D2 MAC signal thus obtained is applied to the digital-to-analog converter 53. After low-pass filtering in the filter 54, which has a cut off frequency of approximately 10 MHz, the signal is applied to the output 21. In Fig. 7 the incoming PAL signal and the outgoing MAC signal appear to be synchronised in such a way that the lines in the two signals are exactly in synchronism. However, this is not necessary. There may be an arbitrary delay between the two signals.

After reproduction the MAC signal as shown diagrammatically in Fig. 7b is applied to a MAC decoder of a MAC television set for conversion of the MAC signal into a picture signal for reproduction on a display screen. In this MAC decoder the chrominance signal is processed in such a way that a delay by one line period is obtained. Consequently, the U and V components in Fig. 7b are lowered by one line. This means, for example, that $U_{i+1}^*$ is then situated in line $L_{i+2}$ together with $U_{i-2}^c$. In conformity with the above formula $U_{i+1}^*$ is equal to

$$U_{i+1}^* = \tfrac{1}{4} U_i + \tfrac{1}{2} U_{i-1} + \tfrac{1}{4} U_{i-2}.$$

As a result of this $Y_{i-1}^c$ is again situated in one line together with the largest component in this formula, which is $U_{i-1}$. The V component associated with $Y_{i-1}^c$ in line $L_{i+2}$ is now obtained by averaging $V_i^*$ and $V_{i+2}^*$, which after shifting are situated in the lines $L_{i+1}$ and $L_{i+3}$ respectively. Using the formula for $V_{i+2}^*$ (see Fig. 7) the principal component $V_{i-1}$ therefore appears to be coupled to $Y_{i-1}^c$.

Conversion from SECAM to MAC will now be described hereinafter.

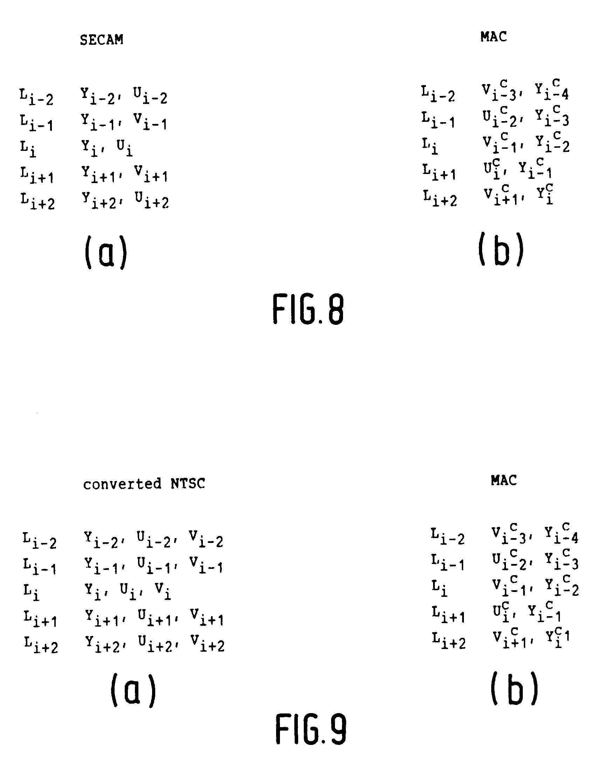

Fig. 8a illustrates the signal content of the SECAM signal in successive lines of the video signal. During the one line $L_{i-1}$ no signal is applied to the terminal 16 in Fig. 4 and the signal $U_{i-2}$ is applied to the terminal 17. During the next line the signal $V_{i-1}$ is applied to the terminal 16 and no signal is applied to the terminal 17. Consequently the switch S2 can now change over from terminal the 16 to the terminal 17 and vice versa in a line by line fashion. The A/D converter 45 can now sample the signals on its inputs with a sampling rate of 6.75 MHz. Again the processing unit 50 provides a time compression of the signals by a factor of 3 and supplies them to the output 51 at such an instant that they are again inserted in the blocks B2 of the video lines. It will be evident from the above that the switch S2 and the AD converter 45 receive another clock signal at their control-signal inputs. For the remainder the processing of the luminance signal is identical to that for conversion from PAL to MAC.

Fig. 8b illustrates how the luminance and chrominance signals in the various lines in the SECAM signal are converted into lines in the MAC signal. From Fig. 8b it is evident that after compression the luminance signal $Y_i$ in line i of the SECAM signal is accommodated in the line $L_{i+2}$ of the MAC signal and is referred to as $Y_i^c$. After compression the chrominance signal component $U_i$ in the line i of the SECAM signal is accommodated in the line $L_{i+1}$ of the MAC signal and is referred to as $U_c^i$. For example after compression the chrominance-signal component $V_{i-1}$ in the line i-1 of the SECAM signal, after compression, is situated in the line $L_i$ of the signal and is referred to as $V_{i-1}^c$.

After reproduction the MAC signal, as is illustrated diagrammatically in Fig. 8b, is applied to a MAC decoder of a MAC television set for conversion of the MAC signal into a picture signal to be reproduced on a display screen. In this MAC decoder the chrominance signal is subjected to an operation which results in a delay by one line period. Consequently the U and the V component in Fig. 8b are in fact lowered by one line. It will be evident that the U component $U_{i-2}^c$ is then situated in the same line as the $U_{i-2}^c$ component. Similarly, all the U and V components are then situated in the same line as that in which the associated Y components are situated. The conclusion is that by the conversion from SECAM to PAL in the encoder 18, as illustrated in Fig. 8 it is achieved that after reproduction and decoding the correct U and Ycomponents or V and Y components are again situated together in one line.

Fig. 2 shows a second embodiment of the arrangement. The arrangement shown in Fig. 2 bears much resemblance to that shown in Fig. 1. The arrangement comprises a second input terminal 80. The terminal 80 is coupled to a terminal b of a switch S3. The output of the filter F3 is coupled to a terminal c of the switch S3. The terminal a of the switch is coupled to the input 15 of the encoder 18. The terminal 18 is also coupled to a detector 82, which has an output coupled to the control input signal of the switch S3. Instead of applying a CVBS signal to the input terminal 1, it is also possible to apply a Y and C signal separately to the terminals 1 (to which the chrominance signal C is applied) and the terminal 80 (to which the luminance signal Y is then applied). An example of such a signal is for example the SVHS signal.

The shown position of the switch S3 is the rest position. This position is obtained in the absence of a control-signal from the detector 81. If the detector 81 detects a luminance signal on the terminal 80, the detector will generate a control-signal under the influence of which the switch S3 is set to the position in which the terminals a and b are interconnected. The luminance signal Y, which is applied to the input terminal 80, can now be applied to the input 15 of the encoder 18.

It is to be noted that the invention is not limited to the embodiments as described herein with reference to the Figures. The invention also relates to those arrangements which differ from the embodiments described herein in respects which are not relevant to the invention. For example, the arrangement in accordance with the invention may also be capable of converting video signals in accordance with two other video standards into a MAC or a MUSE signal and of recording the MAC or MUSE signal thus obtained on the record carrier. Such signals may be for example, video signals in conformity with the NTSC and PAL standards.

Yet another possibility is that the arrangement is capable of converting the three existing video standards PAL, SECAM and NTSC into a MAC signal and of subsequently recording the signal thus converted.

The TDA 4556 IC is suitable for all these possibilities and has a terminal 25 on which an auxiliary signal can be produced to indicate that the signal applied to the input is in conformity with a 4.43 MHz NTSC standard, and a terminal 26 on which an auxiliary signal can be produced to indicate that the signal is in conformity with the 3.58 MHz NTSC standard. In the conversion of NTSC to MAC allowance is to be made for the fact that NTSC is a 60 Hz system and MAC is a 50 Hz system. This means that NTSC generates 60 fields per second and MAC generates only 50 fields. A possibility of realising such a conversion is to dump every sixth field of the NTSC signal. Another problem is that NTSC has a 525 line picture whereas MAC produces a 625 line picture. One possibility of realising such a conversion is to convert 5 lines in the NTSC picture into 6 lines in the MAC picture by averaging or interpolation.

Fig. 9a illustrates the content of the lines in the NTSC signal which has been converted to 50 Hz and 625 lines. Fig. 9b illustrates how conversion of the NTSC signal thus converted into a MAC signal is achieved. The U and the V component of every line in the converted NTSC signal is dumped alternately. This is possible because no averaging is now required. The remaining V or U component is compressed and inserted in a line of the MAC signal. The Y components are also compressed and inserted in the MAC signal in a manner as illustrated in Fig. 9.

**Claims**

1. An arrangement for recording a composite colour video signal on a magnetic record carrier (24), the arrangement comprising an input terminal (1) for receiving the video signal, which input terminal is coupled to an input of a video-signal-processing unit (3, 6, 18) which has an output coupled to the input of a recording unit (23), for recording the video signal which has been processed in the video-signal-processing unit as a time-multiplex video signal on the record carrier (24), characterized in that the input terminal (1) is arranged to receive at least a first composite colour video signal (PAL) in accordance with a first video standard or a second composite colour video signal (SECAM) in accordance with a second video standard, in that the input terminal is coupled to a detection unit (6) which is adapted to detect the video standard of the composite colour video signal applied to the input terminal (1) and which is further adapted to supply at least a first or a second control-signal to an output if the video signal applied to the input terminal is a video signal in conformity with the first video standard (PAL) or the second video standard (SECAM) respectively, in that the output of the detection unit (6) is coupled to a control-signal input (19, 20) of the video-signal-processing unit, which processing unit (3, 6, 18) is adapted to convert the video signal applied to its input into a time-multiplex video signal in conformity with a third standard (MAC) under the influence of the control-signal applied to its control-signal input, and to supply the video signal in conformity with the third standard to its output (21), the video standard of the video signal applied to the input terminal not being the third standard.

2. An arrangement as claimed in Claim 1, characterized in that the third standard is a MAC standard.

3. An arrangement as claimed in Claim 1 or 2, characterized in that the video-signal-processing unit comprises a signal separator (3, 6) and a converter unit (18), in that the input of the video-signal-processing unit is coupled to an input (2) of the signal separator, which comprises three outputs coupled to three inputs (15, 16, 17) of the converter unit (18), which converter unit has an output (21) coupled to the output of the video-signal-processing unit. in that the control-signal input of the video-signal-processing unit is coupled to control-signal inputs of the signal separator (3, 6) and the converter unit (18), in that the signal separator is adapted to derive under the influence of the control-signal applied to its control-signal input (10), a luminance signal Y, a first chrominance signal component R-Y and a second chrominance signal component B-Y, from the composite colour video signal applied to its input and to supply said signals to the first (5), the second and the third output respectively, and in that the converter unit (18) is adapted to convert under the influence of the control-signal applied to its control-signal input (19, 20) the signals Y, R-Y and B-Y applied to its first (15), its second (16) and its third input (17) respectively into the video signal in conformity with the third standard.

4. An arrangement as claimed in Claim 1, 2 or 3, characterized in that the first and the second video standard are the PAL and the SECAM standard.

5. An arrangement as claimed in Claim 1, 2, 3 or 4, characterized in that the input terminal (1) is arranged to receive a third composite colour video signal in conformity with a fourth video standard (NTSC), in that the detection unit (6) is adapted to supply a third control signal to its output in the case that the composite colour video signal applied to the input terminal is a video signal in conformity with the fourth video standard.

6. An arrangement as claimed in Claim 5, characterized in that the fourth video standard is the NTSC standard.

7. An arrangement as claimed in Claim 3 or any one of the Claims 4, 5 or 6, when appendant to Claim 3, characterized in that the arrangement comprises a second input terminal (80), in that the first mentioned input (1) terminal is further arranged to receive the chrominance signal C of the composite colour video signal and the second input terminal (80) is arranged to receive the luminance signal Y of the composite colour video signal, in that the second input terminal (80) is coupled to a first input (b) of switching means ($S_3$) and the first output (5) of the signal separator (3) is coupled to a second input (c) of the switching means, and in that an output (a) of the switching means is coupled to the first input (15) of the converter unit (18).

8. An arrangement as claimed in Claim 7, characterized in that a second detection unit (82) is coupled to the second input terminal (80), in that the second detection unit is adapted to detect a luminance signal (Y) applied to the second input terminal and, upon detection of a luminance signal, to generate a control-signal and to apply said control-signal to an output, which output is coupled to a control-signal input of the switching means ($S_3$), and in that the switching means are adapted to couple the first input (b) to the output (a) in the presence of the control-signal and to couple the second input (c) to the output (a) in the absence of the control-signal.

9. An arrangement as claimed in Claim 3, when appendant to Claim 2, in which the first composite colour video signal is a PAL signal comprising video lines ($L_i$), one video line containing a luminance signal ($Y_i$) and a chrominance signal comprising a first chrominance signal component ($V_i$) and a second chrominance signal component ($U_i$), characterized in that the video-signal-processing unit is adapted to subject the luminance signal of a line of the sequence number i in the PAL signal to time-compression and to insert the compressed luminance signal into a first block section (B$_3$) of a line of the sequence number j in the MAC signal.

10. An arrangement as claimed in Claim 9, characterized in that the video-signal-processing unit is adapted to average and compress the first chrominance signals (V) of a number of consecutive lines having sequence numbers ranging from i to i + k (k ≧ 1) and to insert the signal thus obtained into a second block section (B$_2$) of a line of the sequence number I in the MAC signal, i being an even integer and I = i + n, where n > k.

11. An arrangement as claimed in Claim 10, characterized in that the video-signal-processing unit is adapted to average and compress the second chrominance signals (U) of the same number of consecutive lines having sequence numbers i + 1 to i + k + 1 inclusive and to insert the signal thus obtained into the second block section (B$_2$) of the line of the sequence number I + 1 in the MAC signal.

12. An arrangement as claimed in Claim 9, characterized in that the j-i is 3.

13. An arrangement as claimed in Claim 11, characterized in that k is 2 and n is 3.

14. An arrangementas claimed in Claim 13, characterized in that the video-signal-processing unit is adapted to average the first chrominance signals V$_i$, V$_{i+1}$, V$_{i+2}$ of three consecutive lines i, i + 1, i + 2 in conformity with the formula

$$\tfrac{1}{4} V_i + \tfrac{1}{2} V_{i+1} + \tfrac{1}{4} V_{i+2},$$

and is adapted to average the second chrominance signals U$_{i+1}$, U$_{i+2}$, U$_{i+3}$ of three consecutive lines i + 1, i + 2, i + 3 in conformity with the formula

$$\tfrac{1}{4} U_{i+1} + \tfrac{1}{2} U_{i+2} + \tfrac{1}{4} U_{i+3}.$$

15. An arrangement as claimed in Claim 3, when appendant to Claim 2, in which the second composite colour video signal is a SECAM signal comprising video lines (L$_i$), a video line containing a luminance signal (Y$_i$), a video line of even sequence number containing a first chrominance signal component (V) and a video line of odd sequence number containing a second chrominance signal component (U), characterized in that the video-signal-processing unit is adapted to subject the luminance signal of a line of the sequence number i in the SECAM signal to time-compression and to insert the compressed luminance signal into a first block section (B$_3$) of a line of sequence number j in the MAC signal.

16. An arrangement as claimed in Claim 15, characterized in that the video-signal-processing unit is adapted to compress the first and the second chrominance signal components in lines having the sequence numbers i and i + 1 respectively and to insert said signal components into a second block section of lines having sequence numbers k and k + 1 respectively in the MAC signal.

17. An arrangement as claimed in Claim 15, characterized in that j-i is 2.

**Patentansprüche**

1. Anordnung zum Aufzeichnen eines Bildaustastsynchron-Signals auf einem magnetischen Aufzeichnungträger (24), die eine Eingangsklemme (1) zum Empfangen des Videosignals enthält, die mit einem Eingang einer Videosignalverarbeitungseinheit (3, 6, 18) gekoppelt ist, von der ein Ausgang mit einem Eingang einer Aufzeichnungseinheit (23) zum Aufzeichnen des Videosignals gekoppelt ist, das in der Videosignalverarbeitungseinheit als zeitverschachteltes Videosignal auf dem Aufzeichnungsträger (24) bearbeitet wurde, dadurch gekennzeichnet, daß die Eingangsklemme (1) zum Empfangen wenigstens eines ersten BAS-Videosignals (PAL) entsprechend einer ersten Videonorm oder eines zweiten BAS-Videosignals (SECAM) entsprechend einer zweiten Videonorm angeordnet ist, daß die Eingangsklemme mit einer Detektoreinheit (6) gekoppelt ist, die zum Detektieren der Videonorm des BAS-Signals an die Eingangsklemme (1) ausgelegt und weiter zum Liefern wenigstens eines ersten oder eines zweiten Steuersignals nach einem Ausgang ausgelegt ist, wenn das Videosignal an die Eingangsklemme ein Videosignal entsprechend der ersten Videonorm (PAL) bzw. der zweiten Videonorm (SECAM) ist, daß der Ausgang der Detektoreinheit (6) mit einem Steuersignaleingang (19, 20) der Videosignalverarbeitungseinheit (3, 6, 18) gekoppelt ist, die zum Umsetzen des Videosignals an ihren Eingang in ein zeitverschachteltes Videosignal entsprechend einer dritten Norm (MAC) unter der Einwirkung des Steuersignals an ihren Steuersignaleingang und zum Liefern des Videosignals entsprechend der dritten Norm an ihren Ausgang (21) dient, wobei die Videonorm des Videosignals an die Eingangsklemme nicht die dritte Norm ist.

2. Anordnung nach Anspruch 1 oder 2, dadurch gekennzeichnet, daß die dritte Norm eine MAC-Norm ist.

3. Anordnung nach Aspruch 1 oder 2, dadurch gekennzeichnet, daß die Videosignalverarbeitungseinheit eine Signaltrennstufe (3, 6) und eine Umsetzereinheit (18) enthält, daß der Eingang der Videosignalverarbeitungseinheit mit einem Eingang (2) der Signaltrennstufe gekoppelt ist, die drei Ausgänge enthält, die mit drei Eingängen (15, 16, 17) der Umsetzereinheit (18) gekoppelt sind, die mit einem Ausgang (21) mit dem Ausgang der Videosignalverarbeitungseinheit gekoppelt ist, daß der Steuersignaleingang der Videosignalverarbeitungseinheit mit Steuersignaleingängen der Signaltrennstufe (3, 6) und der Umsetzereinheit (18) gekoppelt ist, daß die Signaltrennstufe zum Ableiten eines Leuchtdichtesignals Y, einer ersten Farbartsignalkomponente R-Y und einer zweiten Farbartsignalkomponente B-Y unter dem Einfluß des an ihren Steuersignaleingang (10) gelegten Steuersignals aus dem BAS-Videosignal an seinen Eingang und zum Liefern dieser Signale an den ersten (5), den zweiten bzw. den dritten Ausgang dient, und daß die Umsetzereinheit (18) zum Umsetzen der Signale Y, R-Y und B-Y nach ihren ersten (15), ihren zweiten (10) bzw. ihren dritten Eingang (17) unter dem Einfluß des an ihren Steuersignaleingang (19, 20) gelegten Signals in das Videosignal entsprechend der dritten Norm dient.

4. Anordnung nach Anspruch 1, 2 oder 3, dadurch gekennzeichnet, daß die erste und die zweite Videonorm die PAL-Norm und die SECAM-Norm sind.

5. Anordnung nach Anspruch 1, 2, 3 oder 4, dadurch gekennzeichnet, daß die Eingangsklemme (1) zum Empfangen eines BAS-Signals entsprechend einer vierten Videonorm (NTSC) angeordnet ist, daß die Detektoreinheit (6) zum Ausgeben eines dritten Steuersignals an ihren Ausgang dient, wenn das BAS-Videosignal an die Eingangsklemme ein Videosignal entsprechend der vierten Videonorm ist.

6. Anordnung nach Anspruch 5, dadurch gekennzeichnet, daß die vierte Videonorm die NTSC-Norm ist.

7. Anordnung nach Anspruch 3 oder nach einem der Ansprüche 4, 5 oder 6, wenn von Anspruch 3 abhängig, dadurch gekennzeichnet, daß sie eine zweite Eingangsklemme (80) enthält, daß die zuerst genannte Eingangsklemme (1) außerdem zum Empfangen des Farbartsignals C des BAS-Videosignals und die zweite Eingangsklemme zum Empfangen des Leuchtdichtesignals Y des BAS-Videosignals dienen, daß die zweite Eingangsklemme (80) mit dem ersten Eingang (b) des Schaltmittels (S₃) und der erste Eingang (5) der Signaltrennstufe (3) mit einem zweiten Eingang (c) des Schaltmittels gekoppelt sind, und daß ein Ausgang (a) des Schaltmittels mit dem ersten Eingang (15) der Umsetzereinheit (18) gekoppelt ist.

8. Anordnung nach Anspruch 7, dadurch gekennzeichnet, daß eine zweite Detektoreinheit (82) mit der zweiten Eingangsklemme (80) verbunden ist, daß die zweite Detektoreinheit zum Detektieren eines an die zweite Eingangsklemme gelegten Leuchtdichtesignals (Y) und zum Anlegen des Steuersignals an einen Ausgang dient, der mit einem Steuersignaleingang des Schaltmittels (S₃) gekoppelt ist und daß das Schaltmittel zum Koppeln des ersten Eingangs (b) mit dem Ausgang (a) beim Erscheinen des Steuersignals und zum Koppeln des zweiten Eingangs (c) mit dem Ausgang (a) beim Ausbleiben des STeuersignals dient.

9. Anordnung nach Anspruch 3, wenn abhängig vom Anspruch 2, in dem das erste BAS-Videosignal ein PAL-Signal mit Videozeilen ($L_i$) ist, wobei eine Videozeile ein Leuchtdichtesignal ($Y_i$) und ein Farbartsignal mit einer ersten Farbartkomponente ($V_i$) und einer zweiten Farbartkomponente ($U_i$) enthält, dadurch gekennzeichnet, daß die Videosignalverarbeitungseinheit zum zeitlichen Komprimieren des Leuchtdichtesignals einer Zeile der Sequenzzahl i im PAL-Signal und zum Einführen des komprimierten Leuchtdichtesignals in einen ersten Blockabschnitt ($B_3$) einer Zeile der Sequenzzahl j im MAC-Signal dient.

10. Anordnung nach Anspruch 9, dadurch gekennzeichnet, daß die Videosignalverarbeitungseinheit zum Mitteln und Komprimieren der ersten Farbartsignale (V) einer Anzahl aufeinanderfolgender Zeilen mit Sequenzzahlen von i bis zu i+k (k ≥ 1) einschließlich und zum Einfügen des auf diese Weise erhaltenen Signals in einen zweiten Blockabschnitt ($B_2$) einer Zeile der Sequenzzahl l im MAC-Signal dient, wobei i eine gerade Zahl und l = i+n sind, worin n > k ist.

**11.** Anordnung nach Anspruch 10, dadurch gekennzeichnet, daß die Videosignalverarbeitungseinheit zum Mitteln und Komprimieren der zweiten Farbartsignale (U) derselben Zahl aufeinanderfolgender Zeilen mit den Sequenzzahlen $i+1$ bis $i+k+1$ einschließlich und zum Einfügen des auf diese Weise erhaltenen Signals in den zweiten Blockabschnitt ($B_2$) der Zeile der Sequenzzahl $I+1$ im MAC-Signal dient.

**12.** Anordnung nach Anspruch 9, dadurch gekennzeichnet, daß j-i 3 beträgt.

**13.** Anordnung nach Anspruch 11, dadurch gekennzeichnet, daß k 2 und n 3 betragen.

**14.** Anordnung nach Anspruch 13, dadurch gekennzeichnet, daß die Videosignalverarbeitungseinheit zum Mitteln der ersten Farbartsignale $V_i$, $V_{i+1}$, $V_{i+2}$ der drei aufeinanderfolgenden
Zeilen i, $i+1$ und $i+2$ entsprechend der Gleichung:

$$1/4\ V_i\ +\ 1/2\ V_{i+1}\ +\ 1/4\ V_{i+2}$$

und zum Mitteln der zweiten Farbartsignale $U_{i+1}$, $U_{i+2}$ und $U_{i+3}$ der drei aufeinanderfolgenden Zeilen $i+1$, $i+2$ und $i+3$ entsprechend der Gleichung dient:

$$1/4\ U_{i+1}\ +\ 1/2\ U_{i+2}\ +\ 1/4\ U_{i+3}$$

**15.** Anordnung nach Anspruch 3, wenn abhängig vom Anspruch 2, in dem das erste BAS-Videosignal ein SECAM-Signal mit Videozeilen ($L_i$) ist, wobei eine Videozeile ein Leuchtdichtesignal ($Y_i$), eine Videozeile gerader Sequenzzahl eine erste Farbartsignalkomponente (V) und eine Videozeile ungerader Sequenzzahl eine zweiten Farbartsignalkomponente (U) enthalten, dadurch gekennzeichnet, daß die Videosignalverarbeitungseinheit zum zeitlichen Komprimieren des Leuchtdichtesignals einer Zeile mit der Sequenzzahl i im SECAM-Signal und zum Einführen des komprimierten Leuchtdichtesignals in einen ersten Blockabschnitt ($B_3$) einer Zeile mit der Sequenzzahl j im MAC-Signal dient.

**16.** Anordnung nach Anspruch 15, dadurch gekennzeichnet, daß die Videosignalverarbeitungseinheit zum Komprimieren der ersten und zweiten Farbartsignalkomponenten in Zeilen mit den Sequenzzahlen i und $i+1$ und zum Einführen der Signalkomponenten in zweite Blockabschnitte vom Zeilen mit Sequenzzahlen k bzw. $k+1$ im MAC-Signal dient.

**17.** Anordnung nach Anspruch 15, dadurch gekennzeichnet, daß j-i 2 beträgt.

**Revendications**

**1.** Dispositif pour enregistrer un signal vidéo couleur composite sur un support d'enregistrement magnétique (24), le dispositif comprenant une borne d'entrée (1) pour recevoir le signal vidéo, cette borne d'entrée étant couplée à une entrée d'une unité de traitement de signal vidéo (3, 6, 18), dont une sortie est couplée à l'entrée d'une unité d'enregistrement (23), en vue d'enregistrer le signal vidéo ayant été traité dans l'unité de traitement de signal vidéo, sous la forme de signal vidéo à multiplexage temporel, sur le support d'enregistrement (24), caractérisé en ce que la borne d'entrée (1) est agencée pour recevoir au moins un premier signal vidéo couleur composite (PAL), conforme à un premier standard vidéo, ou un deuxième signal vidéo couleur composite (SECAM) conforme à un deuxième standard vidéo, que la borne d'entrée est couplée à une unité de détection (6), qui est à même de détecter le standard vidéo du signal vidéo couleur composite appliqué à la borne d'entrée (1) et qui est, en outre, à même de fournir au moins un premier ou un deuxième signal de commande à une sortie, si le signal vidéo appliqué à la borne d'entrée est un signal vidéo conforme, respectivement, au premier standard vidéo (PAL) ou avec le deuxième standard vidéo (SECAM), que la sortie de l'unité de détection (6) est couplée à une entrée de signal de commande (19, 20) de l'unité de traitement de signal vidéo, ladite unité de traitement (3, 6, 18) étant à même de convertir le signal vidéo appliqué à son entrée en un signal vidéo à multiplexage temporel, conformément à un troisième standard (MAC), sous l'influence du signal de commande appliqué à son entrée de signal de commande, et pour fournir à sa sortie (21) le signal vidéo conforme au troisième standard, le standard vidéo du signal vidéo appliqué à la borne d'entrée n'étant pas le troisième standard.

**2.** Dispositif selon la revendication 1, caractérisé en ce que le troisième standard est un standard MAC.

**3.** Dispositif selon la revendication 1 ou 2, caractérisé en ce que l'unité de traitement de signal vidéo comprend un séparateur de signaux (3, 6) et une unité de conversion (18), que l'entrée de l'unité de traitement de signal vidéo est couplée à une entrée (2) du séparateur de signaux qui comprend trois sorties couplées aux trois entrées (15, 16, 17) de l'unité de conversion (18), ladite unité de conversion ayant une sortie (21) couplée à la sortie de l'unité de traitement de signal vidéo, que l'entrée de signal de commande de l'unité de traitement de signal vidéo est couplée à des entrées de signaux de commande du séparateur de signaux (3, 6) et de l'unité de conversion (18), que le séparateur de signaux est conçu pour dériver, sous l'influence du signal de commande appliqué à son entrée de signal de commande (10), un signal de luminance Y, une première composante de signal de chrominance R-Y et une seconde composante de signal de chrominance B-Y, à partir du signal vidéo couleur composite appliqué à son entrée et pour fournir lesdits signaux à la première (5), à la deuxième et à la troisième sortie, respectivement, et que l'unité de conversion (18) est à même de convertir, sous l'influence du signal de commande appliqué à son entrée de signal de commande (19, 20), les signaux Y, R-Y et B-Y appliqués, respectivement, à sa première entrée (15), à sa deuxième entrée (16) et à sa troisième entrée (17), pour donner le signal vidéo conforme au troisième standard.

4. Dispositif selon la revendication 1, 2 ou 3, caractérisé en ce que les premier et deuxième standards vidéo sont les standards PAL et SECAM.

5. Dispositif selon la revendication 1, 2, 3 ou 4, caractérisé en ce que la borne d'entrée (1) est prévue pour recevoir un troisième signal vidéo couleur composite, conforme à un quatrième standard vidéo (NTSC), que l'unité de détection (6) est à même de fournir un troisième signal de commande à sa sortie, dans le cas où le signal vidéo couleur composite appliqué à la borne d'entrée est un signal vidéo conforme au quatrième standard vidéo.

6. Dispositif selon la revendication 5, caractérisé en ce que le quatrième standard vidéo est le standard NTSC.

7. Dispositif selon la revendication 3 ou l'une quelconque des revendications 4, 5 ou 6, découlant de la revendication 3, caractérisé en ce que le dispositif comprend une deuxième borne d'entrée (80), que la première borne d'entrée (1) mentionnée est, en outre, prévue pour recevoir le signal de chrominance C du signal vidéo couleur composite et la deuxième borne d'entrée (80), pour recevoir le signal de luminance Y du signal vidéo couleur composite, que la deuxième borne d'entrée (80) est couplée à une première entrée (b) de moyens de commutation (S3) et la première sortie (5) du séparateur de signaux (3) est couplée à une deuxième entrée (c) des moyens de commutation et qu'une sortie (a) des moyens de commutation est couplée à la première entrée (15) de l'unité de conversion (18).

8. Dispositif selon la revendication 7, caractérisé en ce qu'une deuxième unité de détection (82) est couplée à la deuxième borne d'entrée (80), que la deuxième unité de détection est à même de détecter un signal de luminance (Y) appliqué à la deuxième borne d'entrée et, lors de la détection d'un signal de luminance, de produire un signal de commande et d'appliquer ledit signal de commande à une sortie, cette sortie étant couplée à une entrée de signal de commande des moyens de commutation (S3), et que les moyens de commutation sont à même de coupler la première entrée (b) à la sortie (a), en présence du signal de commande et de coupler la deuxième entrée (c) à l'entrée (a) en l'absence du signal de commande.

9. Dispositif selon la revendication 3, découlant de la revendication 2, dans lequel le premier signal vidéo couleur composite est un signal PAL comprenant des lignes vidéo ($L_i$), une ligne vidéo contenant un signal de luminance ($Y_i$) et un signal de chrominance comprenant une première composante de signal de chrominance ($V_i$) et une deuxième composante de signal de chrominance ($U_i$), caractérisé en ce que l'unité de traitement de signal de vidéo est à même de soumettre le signal de luminance d'une ligne, ayant le numéro d'ordre i dans le signal PAL, à une compression temporelle et d'insérer le signal de luminance comprimé dans une première section de bloc (B3) d'une ligne ayant le numéro d'ordre (j) dans le signal MAC.

10. Dispositif selon la revendication 9, caractérisé en ce que l'unité de traitement de signal vidéo est à même de calculer la moyenne des premiers signaux de chrominance (V) d'un certain nombre de lignes consécutives ayant des numéros d'ordre compris entre i et i + k (k ≥ 1) et de les comprimer et d'insérer le signal ainsi obtenu dans une deuxième section de bloc (B2) d'une ligne ayant le numéro d'ordre I dans le signal MAC, i étant un nombre entier

pair et l = i + n, lorsque n > k.

**11.** Dispositif selon la revendication 10, caractérisé en ce que l'unité de traitement de signal vidéo est à même de calculer la moyenne des deuxièmes signaux de chrominance (U) du même nombre de lignes consécutives ayant des numéros d'ordre i + 1 à i + k + 1, inclus, et de les comprimer et d'y insérer le signal ainsi obtenu dans la deuxième section de bloc (B2) de la ligne de numéro d'ordre l + 1 dans le signal MAC.

**12.** Dispositif selon la revendication 9, caractérisé en ce que j-i = 3.

**13.** Dispositif selon la revendication 11, caractérisé en ce que k vaut 2 et n vaut 3.

**14.** Dispositif selon la revendication 13, caractérisé en ce que l'unité de traitement de signal vidéo est à même de calculer la moyenne des premiers signaux de chrominance $V_i, V_{i+1}, V_{i+2}$ de trois lignes consécutives i, i + 1, i + 2, selon la formule :

$$\tfrac{1}{4} V_i + \tfrac{1}{2} V_{i+1} + \tfrac{1}{4} V_{i+2}$$

et est à même de calculer la moyenne des deuxièmes signaux de chrominance $U_{i+1}, U_{i+2}, U_{i+3}$ de trois lignes consécutives i + 1, i + 2, i + 3, selon la formule :

$$\tfrac{1}{4} U_{i+1} + \tfrac{1}{2} U_{i+2} + \tfrac{1}{4} U_{i+3} .$$

**15.** Dispositif selon la revendication 3, lorsqu'elle découle de la revendication 2, dans lequel le deuxième signal vidéo couleur composite est un signal SECAM, comprenant des lignes vidéo $(L_i)$, une ligne vidéo contenant un signal de luminance $(Y_i)$, une ligne vidéo d'un numéro d'ordre pair, contenant une première composante de signal de chrominance (V), et une ligne vidéo ayant un numéro d'ordre impair, contenant une deuxième composante de signal de chrominance (U), caractérisé en ce que l'unité de traitement de signal vidéo est à même de soumettre à une compression temporelle le signal de luminance, d'une ligne de numéro d'ordre i dans le signal SECAM et d'insérer le signal de luminance comprimé dans une première section de bloc (B3) d'une ligne de numéro d'ordre j dans le signal MAC.

**16.** Dispositif selon la revendication 15, caractérisé en ce que l'unité de traitement de signal vidéo est à même de comprimer les première et deuxième composantes de signaux de chrominance dans des lignes ayant des numéros d'ordre i et i + 1, respectivement, et d'insérer lesdites composantes de signaux dans une deuxième section de bloc de lignes ayant des numéros d'ordre k et k + 1, respectivement, dans le signal MAC.

**17.** Dispositif selon la revendication 15, caractérisé en ce que j-i = 2.

FIG.1

FIG.2

FIG.3a

FIG. 3b

FIG. 4

FIG. 5

15

|  | PEAK–PEAK AMPLITUDE | NB OF PERIODS | COMPRESS. RATE | LENGTH IN μS | BANDWIDTH |
|---|---|---|---|---|---|
| SOUND AND DATA | 800mV | 208 | | 10,32 | 5MHz |
| CLAMP | 0,5v DC | 15 | | 0,75 | |
| CHROMINANCE | 1V | 348 | 3 | 17,23 | 4,8MHz |
| LUMINANCE | 1V | 696 | 3/2 | 34,42 | 8,4MHz |
| RISE TIME | | 29 | | 1,28 | |
| | | 1296 | | 64μS | |

## FIG.6

PAL

$$L_{i-2} \quad Y_{i-2}, \ U_{i-2}, \ V_{i-2}$$
$$L_{i-1} \quad Y_{i-1}, \ U_{i-1}, \ V_{i-1}$$
$$L_{i} \quad Y_{i}, \ U_{i}, \ V_{i}$$
$$L_{i+1} \quad Y_{i+1}, \ U_{i+1}, \ V_{i+1}$$
$$L_{i+2} \quad Y_{i+2}, \ U_{i+2}, \ V_{i+2}$$
$$L_{i+3} \quad Y_{i+3}, \ U_{i+3}, \ V_{i+3}$$

(a)

MAC

$$L_{i-2} \quad V_{i-2}^*, \ Y_{i-5}^C$$
$$L_{i-1} \quad U_{i-1}^*, \ Y_{i-4}^C$$
$$L_{i} \quad V_{i}^*, \ Y_{i-3}^C$$
$$L_{i+1} \quad U_{i+1}^*, \ Y_{i-2}^C$$
$$L_{i+2} \quad V_{i+2}^*, \ Y_{i-1}^C$$
$$L_{i+3} \quad U_{i+3}^*, \ Y_{i}^C$$

(b)

$$V_{i+2}^* = \tfrac{1}{4} V_{i+1} + \tfrac{1}{2} V_i + \tfrac{1}{4} V_{i-1}.$$

$$U_{i+1}^* = \tfrac{1}{4} U_i + \tfrac{1}{2} U_{i-1} + \tfrac{1}{4} U_{i-2}.$$

## FIG.7

SECAM

$L_{i-2}$  $Y_{i-2}$, $U_{i-2}$
$L_{i-1}$  $Y_{i-1}$, $V_{i-1}$
$L_i$  $Y_i$, $U_i$
$L_{i+1}$  $Y_{i+1}$, $V_{i+1}$
$L_{i+2}$  $Y_{i+2}$, $U_{i+2}$

## (a)

MAC

$L_{i-2}$  $V_{i-3}^C$, $Y_{i-4}^C$
$L_{i-1}$  $U_{i-2}^C$, $Y_{i-3}^C$
$L_i$  $V_{i-1}^C$, $Y_{i-2}^C$
$L_{i+1}$  $U_i^C$, $Y_{i-1}^C$
$L_{i+2}$  $V_{i+1}^C$, $Y_i^C$

## (b)

# FIG.8

converted NTSC

$L_{i-2}$  $Y_{i-2}$, $U_{i-2}$, $V_{i-2}$
$L_{i-1}$  $Y_{i-1}$, $U_{i-1}$, $V_{i-1}$
$L_i$  $Y_i$, $U_i$, $V_i$
$L_{i+1}$  $Y_{i+1}$, $U_{i+1}$, $V_{i+1}$
$L_{i+2}$  $Y_{i+2}$, $U_{i+2}$, $V_{i+2}$

## (a)

MAC

$L_{i-2}$  $V_{i-3}^C$, $Y_{i-4}^C$
$L_{i-1}$  $U_{i-2}^C$, $Y_{i-3}^C$
$L_i$  $V_{i-1}^C$, $Y_{i-2}^C$
$L_{i+1}$  $U_i^C$, $Y_{i-1}^C$
$L_{i+2}$  $V_{i+1}^C$, $Y_i^C 1$

## (b)

# FIG.9

17